# FASCICULE DE BREVET EUROPEEN

(11) **EP 1 868 873 B1**
(45) Date de publication et mention de la délivrance du brevet: **12.08.2009**
(21) Numéro de dépôt: 06726337.6
(22) Date de dépôt: 11.04.2006
(51) Int. Cl.: B62D 47/00

(54) **VEHICULE AUTOMOBILE DE TYPE BERLINE TRANSFORMABLE**
KABRIOLETT-LIMOUSINE
CONVERTIBLE SALOON CAR

(30) Priorité: 14.04.2005 FR 0503745
(43) Date de publication de la demande: 26.12.2007
(73) Titulaire: PEUGEOT CITROËN AUTOMOBILES S.A., 78140 Vélizy Villacoublay (FR)
(72) Inventeur: RAMES, Christian, F-78700 Conflans Sainte Honorine (FR)
(86) Numéro de dépôt international: PCT/FR2006/050331
(87) Numéro de publication internationale: WO 2006/108995

(56) Documents cités:
- FR-A- 2 847 863
- US-A- 5 961 173
- US-B1- 6 851 741

## Description

La présente invention concerne un véhicule automobile de type berline transformable en un véhicule automobile de type à benne ouverte vers le haut, également appelé pick-up.

Les véhicules automobiles de type berline comportent, de manière classique, un habitacle contenant une rangée de sièges avant et une rangée de sièges arrière et un coffre délimité par un couvercle déplaçable entre une position de fermeture et une position d'ouverture et par une paroi arrière fixe. L'habitacle est séparé du coffre par une cloison s'étendant transversalement par rapport à l'axe longitudinal du véhicule.

Généralement, dans ce type de véhicule automobile, la rangée de sièges arrière est escamotable et la cloison de séparation est basculable entre une position sensiblement verticale de séparation de l'habitacle du coffre et une position sensiblement horizontale mettant en communication l'habitacle et le coffre afin d'augmenter longitudinalement le volume de chargement de ce coffre.

Mais, avec ce genre de véhicule, la capacité de chargement du coffre est limitée en hauteur par le couvercle.

On connaît également des véhicules automobiles à benne ouverte vers le haut, appelé pick-up, qui comportent à l'arrière d'une cabine constituée par la partie antérieure du véhicule, renfermant le poste de conduite, la benne ouverte vers le haut de forme généralement parallélépipédique.

La benne ouverte de ce type de véhicules comporte un plancher, deux parois latérales dans la direction longitudinale du véhicule et une paroi d'extrémité arrière ouvrante, située à l'opposé de la cabine. De tels véhicules présentent des avantages en ce qui concerne leur capacité de chargement par rapport à un véhicule classique ou même par rapport à un véhicule du type monocorps ou break, puisque le volume de chargement de la benne est pratiquement illimité du fait de l'absence d'un toit recouvrant ladite benne.

Par contre, les véhicules de ce type ne permettent pas de modifier le rapport entre le volume de chargement et celui alloué aux passagers, principalement à cause de la paroi fixe séparant l'habitacle de la benne et ne peuvent être utilisés qu'à des fins utilitaires et seulement par le conducteur et éventuellement un passager, ce qui limite leur intérêt dans le cas de leur utilisation

Un exemple de cette technique antérieure est divulgué par le document FR 2 847 863. par des particuliers.

L'invention a pour but d'éviter ces inconvénients en proposant un véhicule automobile transformable en un véhicule automobile de type à benne ouverte vers le haut dont le rapport entre le volume de chargement et le volume alloué aux passagers est modulable en fonction des charges et/ou des passagers à transporter.

L'invention a donc pour objet un véhicule automobile de type berline transformable en un véhicule automobile de type à benne ouverte vers le haut, appelé pick-up, et comportant, d'une part, un habitacle délimité par deux parois latérales, un pavillon et un plancher et contenant une rangée de sièges avant et un rangée de sièges arrière déplaçables entre une position d'utilisation et une position escamotée et, d'autre part, un coffre délimité par un couvercle, une paroi d'extrémité et une cloison transversale de séparation entre l'habitacle et le coffre et surmontée par une lunette arrière, **caractérisé en ce que** le couvercle est formé par deux demi-panneaux de coffre, un panneau avant monté articulé sur un ensemble de support monté articulé sur le bord supérieur de la cloison de séparation et un panneau arrière monté articulé sur le panneau avant et en ce que la lunette arrière est montée articulée sur ledit bord supérieur de la cloison de séparation et en ce que ladite cloison de séparation est montée articulée sur le plancher du véhicule.

Selon d'autres caractéristiques de l'invention :
- la lunette arrière est déplaçable par basculement vers l'avant du véhicule entre une première position de prolongement de la cloison de séparation et une seconde position escamotée rabattue contre la cloison de séparation,
- le panneau arrière du couvercle est déplaçable par basculement entre une première position prolongeant le panneau avant et une deuxième position rabattue sur ledit panneau avant,
- les panneaux avant et arrière rabattus l'un sur l'autre sont déplaçables par basculement entre ladite deuxième position et une troisième position rabattue contre la cloison de séparation,
- dans la seconde position de la lunette arrière et dans la deuxième position des panneaux avant et arrière du couvercle, la cloison de séparation est déplaçable par basculement vers l'avant du véhicule entre une position sensiblement verticale séparant l'habitacle du coffre et une autre position sensiblement horizontale prolongeant le plancher du coffre, et
- dans la seconde position de la lunette arrière et dans la troisième position des panneaux avant et arrière du couvercle, la cloison de séparation est déplaçable vers l'arrière du véhicule entre ladite deuxième position et une troisième position sensiblement verticale séparant l'habitacle du coffre.

D'autres caractéristiques et avantages de l'invention apparaîtront au cours de la description qui va suivre, donnée à titre d'exemple et faite en référence aux dessins annexés, sur lesquels :
- la Fig. 1 est une vue schématique en coupe longitudinale de la partie arrière d'un véhicule automobile selon l'invention, dans la configuration de type berline,
- la Fig. 2 est une vue schématique à plus grande échelle montrant l'articulation de la cloison transversale de séparation de l'habitacle et du coffre,
- la Fig. 3 est une vue schématique à plus grande échelle montrant l'articulation du couvercle de coffre sur la cloison transversale de séparation de l'habitacle et du coffre, et
- les Figs. 4 à 10 sont des vues schématiques en coupe longitudinale de la partie arrière du véhicule automobile montrant les différentes étapes de transformation du véhicule de type berline en véhicule de type à benne ouverte vers le haut.

La partie arrière du véhicule automobile représentée schématiquement sur les figures correspond à celle d'un véhicule de type berline transformable, désigné par la référence générale 1, et qui comporte, d'une manière classique, une carrosserie formant, entre autres, un habitacle 2 et un coffre 3.

L'habitacle 2 contient une rangée de sièges avant 4 et une rangée de sièges arrière 5 qui est déplaçable entre une position d'utilisation et une position escamotée dans un plancher 6. Le coffre 3 est délimité par une cloison transversale 10 de séparation entre l'habitacle 2 et ledit coffre 3, une paroi d'extrémité arrière 11 ainsi que par deux parois latérales 12 qui se prolongent jusqu'à ladite paroi d'extrémité arrière 11. Ce coffre est également délimité, à sa partie inférieure, par un plancher 13 et, à sa partie supérieure, par un couvercle 20 qui s'étend entre le bord supérieur 10a de la cloison transversale 10 et le bord supérieur 11a de la paroi d'extrémité 11.

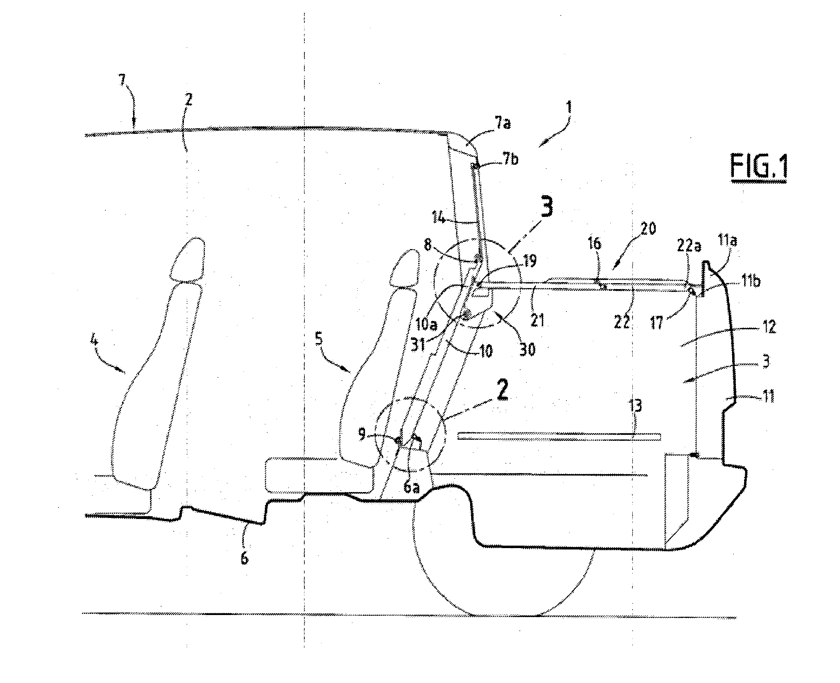

La cloison transversale 10 est surmontée par une lunette arrière 14 qui s'étend jusqu'au bord arrière 7a d'un pavillon 7. Cette lunette arrière 14 est montée articulée au moyen d'un axe transversal 8 sur le bord supérieur 10a de la cloison de séparation 10 et un joint d'étanchéité 7b est disposé sur le bord arrière 7a du pavillon 7 pour assurer l'étanchéité entre l'habitacle 2 et l'extérieur lorsque la lunette arrière 14 est dans la position de prolongement de la cloison de séparation 10, comme montré à la Fig. 1.

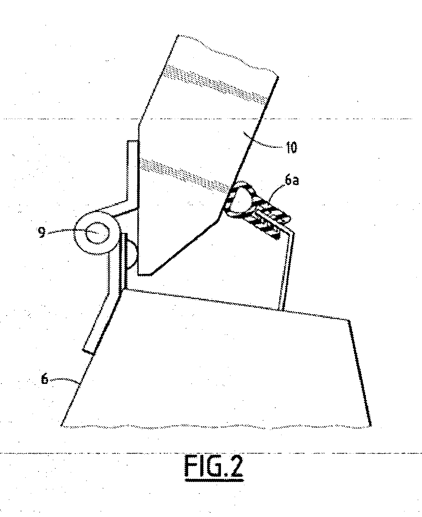

La cloison de séparation 10 est montée articulée sur le plancher 6 du véhicule au moyen d'un axe transversal 9 et un joint d'étanchéité 6a est disposé entre le plancher 6 et la cloison de séparation 10 de façon à assurer l'étanchéité entre l'habitacle 2 et le coffre 3 lorsque cette cloison 10 est dans sa position de séparation entre ledit habitacle 2 et ledit coffre 3, comme montré à la Fig. 2.

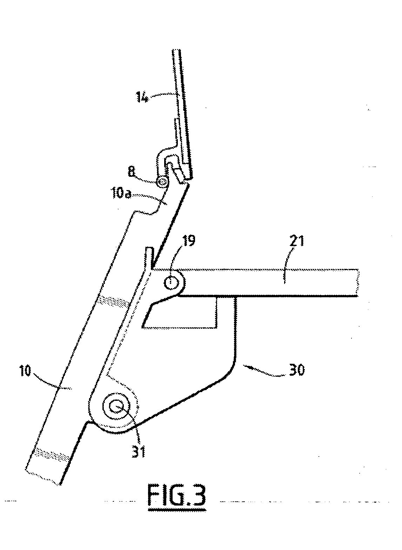

Ainsi que représenté à la Fig. 1, le couvercle 20 se compose de deux demi-panneaux de coffre, un panneau avant 21 et un panneau arrière 22. Le panneau avant 21 est monté articulé sur un ensemble de support 30 (Fig. 3) au moyen d'un axe transversal 19 et qui est lui même monté articulé sur le bord supérieur 10a de la cloison de séparation 10 au moyen d'un axe transversal 31. L'ensemble de support 30 est constitué par exemple par deux équerres, non représentées, s'étendant parallèlement l'une par rapport à l'autre ou par tout autre organe approprié.

Le panneau arrière 22 est monté articulé sur le panneau avant 21, au moyen d'un axe transversal 16.

Dans la position d'obturation de la partie supérieure du coffre 3, les deux demi-panneaux, respectivement avant 21 et arrière 22 du couvercle 20, sont placés dans le prolongement l'un de l'autre, comme cela apparaît à la Fig. 1.

Dans cette configuration, le bord arrière 22a du panneau arrière 22 est en appui sur un rebord 11b ménagé dans la paroi d'extrémité 11 et ce rebord 11 b est pourvu d'un joint d'étanchéité 17 assurant l'étanchéité entre le panneau arrière 22 et la paroi d'extrémité 11. De même, les bords latéraux des deux panneaux 21 et 22 sont en appui sur un rebord, non représenté, ménagé dans chaque paroi latérale 12 et un joint d'étanchéité, non représenté, est disposé entre ces bords latéraux des panneaux 21 et 22 et la paroi 12 correspondante.

Le panneau arrière 22 du couvercle 20 peut être équipé d'un élément de verrouillage de type classique, comme par exemple une serrure, non représentée, pour maintenir le couvercle 2 dans la position de fermeture du coffre 3.

En se reportant maintenant aux Figs. 1 et 4 à 10, on va décrire les différentes étapes permettant à un utilisateur de transformer le véhicule automobile 1 de type berline en un véhicule automobile de type à benne ouverte vers le haut.

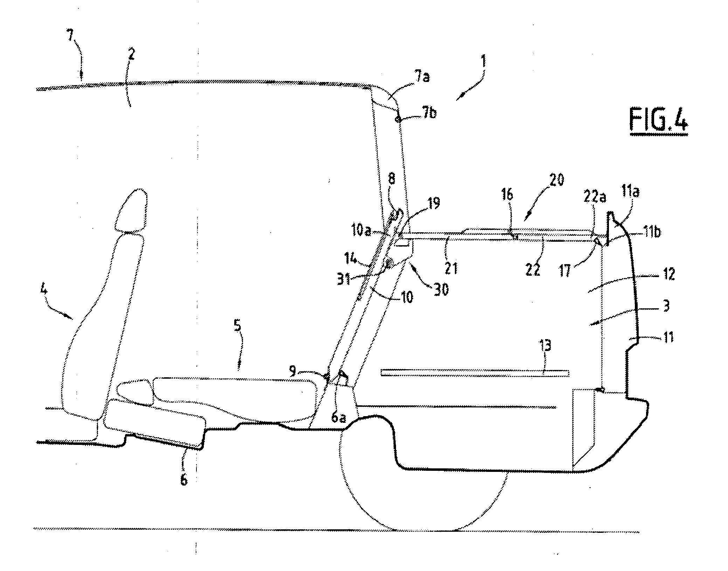

Tout d'abord, l'utilisateur procède au repliage de la rangée de sièges arrière 5 de façon à la placer dans un logement ménagé à cet effet dans le plancher 6 du véhicule automobile (Fig. 4).

Ensuite, l'utilisateur déplace la lunette arrière 14 par basculement vers l'avant du véhicule entre une première position de prolongement de la cloison de séparation 10 (Fig. 1) et une seconde position escamotée rabattue contre cette cloison de séparation 10 (Fig. 4).

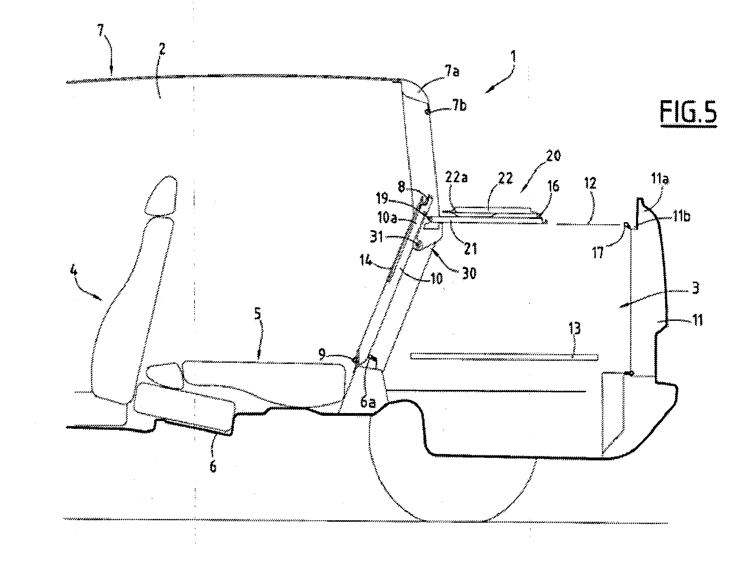

L'utilisateur déplace par basculement autour de l'axe d'articulation 16, le panneau arrière 22, entre une première position prolongeant le panneau avant 21 (Fig. 1) et une seconde position rabattue sur ce panneau avant 21 (Fig. 5).

Les étapes décrites précédemment et représentées aux figures 4 et 5 peuvent être inversées sans nuire à la transformation du véhicule.

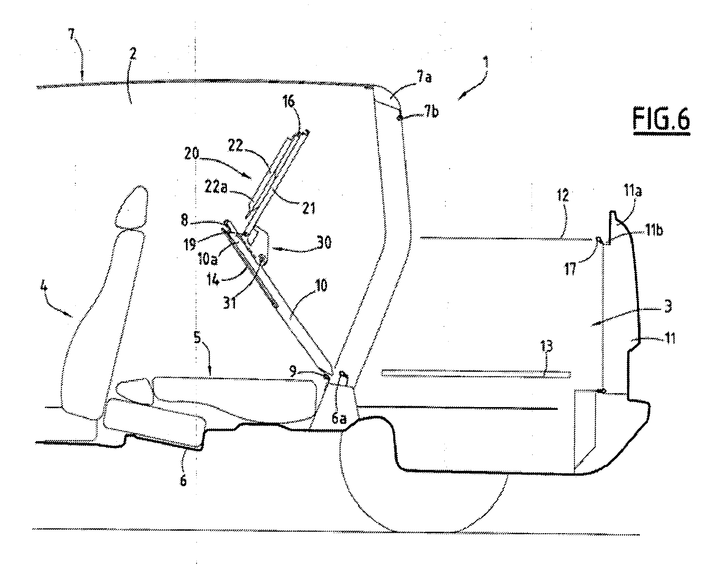

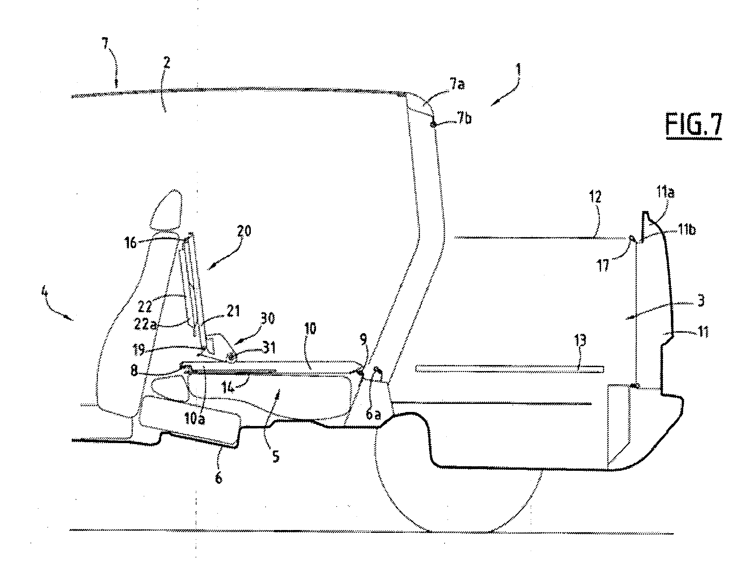

Dans la configuration représentée à la Fig. 5, c'est à dire avec la lunette arrière 14 rabattue sur la cloison de séparation 10 et le panneau arrière 22 rabattu sur le panneau avant 21 du couvercle 20, l'utilisateur, après avoir déverrouillé la cloison de séparation 10, déplace par basculement vers l'avant du véhicule (Fig. 6) ladite cloison de séparation 10 entre une première position sensiblement verticale séparant l'habitacle 2 du coffre 3 (Fig. 5) et une seconde position sensiblement horizontale prolongeant le plancher du coffre 13 (Fig. 7).

L'axe transversal 31 d'articulation entre l'ensemble de support 30 et la cloison transversale 10 permet aux panneaux avant 21 et arrière 22 de venir s'appuyer contre les dossiers de la rangée de sièges avant 4 et cela pour toutes les positions de ces dossiers de ladite rangée de sièges avant 4, comme montré à la Fig. 7.

Dans la seconde position de la cloison de séparation 10 représentée à la Fig. 7, les panneaux avant 21 et arrière 22 du couvercle 20 s'étendent sensiblement verticalement derrière la rangée de sièges avant 4 pour former une plaque d'arrêt de charges.

Le pavillon 7 peut comporter une partie arrière escamotable ce qui permet d'augmenter vers le haut le volume de chargement du véhicule automobile 1. Cette partie arrière peut être basculée vers l'avant du véhicule pour l'amener dans le prolongement de la rangée de sièges avant 4 et ainsi isoler les passagers occupant la rangée de sièges avant de la partie arrière de ce véhicule utilisée pour le transport de charges.

Dans la configuration représentée à la Fig. 7, le véhicule automobile ainsi transformé en véhicule automobile de type à benne ouverte vers le haut présente un volume de transport de charges important aussi bien longitudinalement qu'en hauteur.

Dans le cas où des passagers doivent être transportés à l'arrière du véhicule, tout en ayant une configuration de ce véhicule à benne ouverte vers le haut, l'utilisateur peut replacer la cloison de séparation 10 dans la première position décrite ci-dessus, cette dernière permettant de transporter des passagers sur la rangée de sièges arrière 5 et de transporter des charges volumineuses.

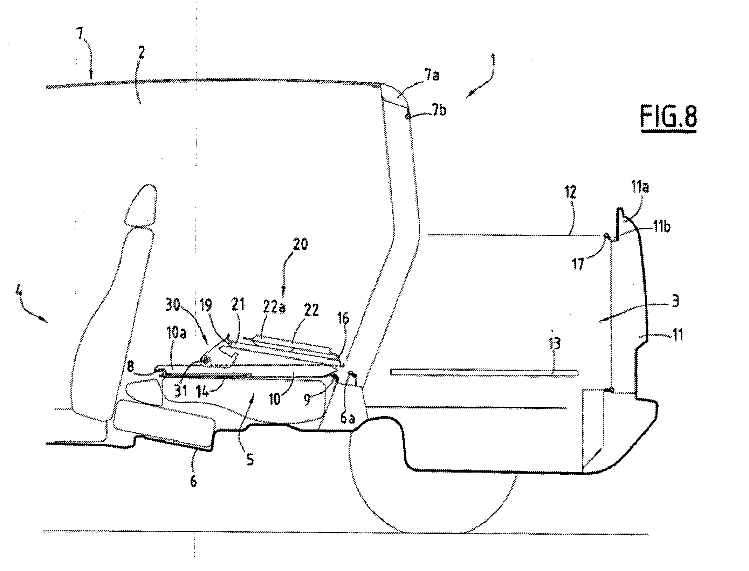

Pour cela et ainsi que montré sur les Figs. 8 à 10, l'utilisateur déplace par basculement autour de l'axe transversal 31 les panneaux avant 21 et arrière 22 du couvercle 20 rabattus l'un sur l'autre, par basculement entre la deuxième position dans laquelle ils sont placés sensiblement verticalement derrière les dossiers de la rangée de sièges avant 4 et une troisième position rabattue contre la cloison de séparation 10 (Fig. 8).

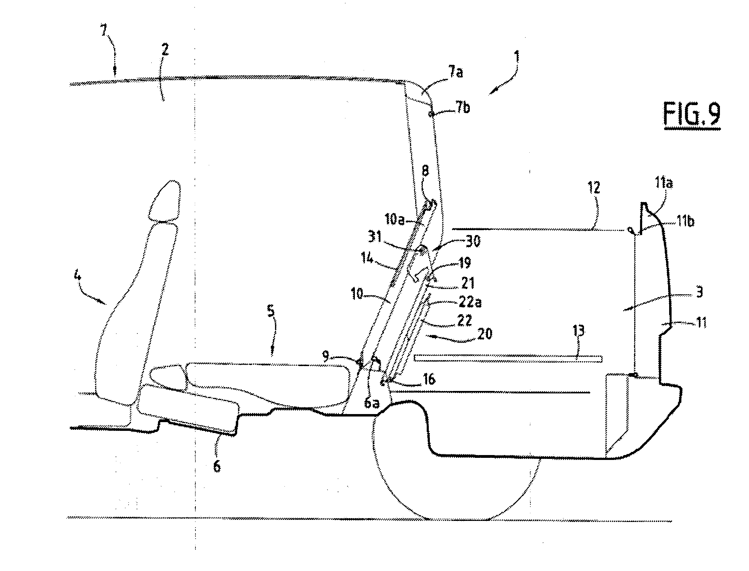

Ensuite, l'utilisateur déplace la cloison de séparation 10 vers l'arrière du véhicule pour l'amener dans la première position sensiblement verticale (Fig. 9) séparant l'habitacle 2 du coffre 3. Dans cette configuration, la lunette arrière 14 et les panneaux avant 21 et arrière 22 sont rabattus contre la cloison de séparation 10.

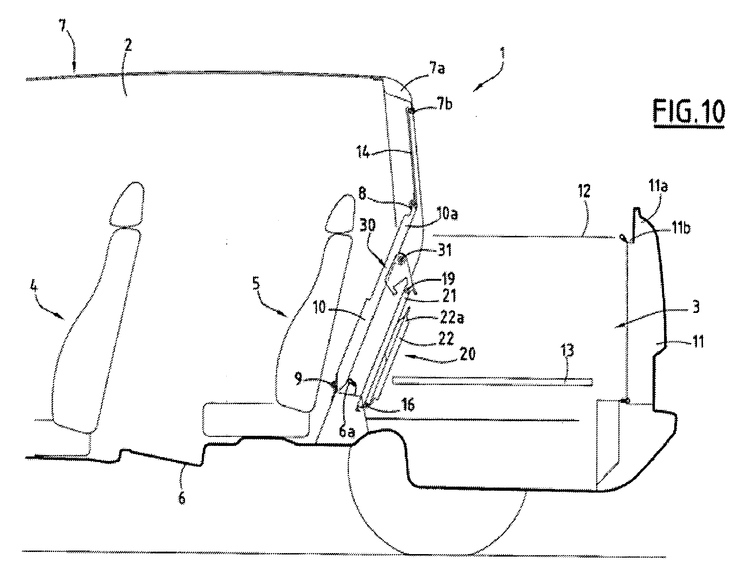

Pour isoler l'habitacle 2 de l'extérieur, l'utilisateur peut ramener la lunette arrière 14 dans le prolongement de la cloison de séparation 10, ainsi que montré à la Fig. 10.

Dans les configurations représentées sur les Figs. 9 et 10, les passagers peuvent prendre place sur la rangée de sièges arrière 5 et des charges volumineuses peuvent être transportées du fait que le véhicule automobile 1 présente à l'arrière un espace de chargement ouvert à sa partie supérieure.

Pour remettre le véhicule en configuration berline, il suffit à l'utilisateur d'effectuer les mêmes opérations en sens inverse.

La paroi d'extrémité 11 peut également être basculable vers l'extérieur ce qui permet d'augmenter longitudinalement le volume de chargement du coffre 3 du véhicule automobile.

Le véhicule automobile selon l'invention permet de passer facilement d'une configuration de type berline à plusieurs configurations de type à benne ouverte vers le haut en fonction du volume des charges à transporter au moyen de mécanismes simples à mettre en oeuvre et de pouvoir disposer d'un volume de chargement important et modulable.

Le véhicule automobile selon l'invention est particulièrement économique du fait de sa polyvalence et il permet de transporter des passagers dans de bonnes conditions de confort et de protection climatique, et d'effectuer des transports de charges volumineuses.

## Revendications

1. Véhicule automobile de type berline transformable en un véhicule automobile de type à benne ouverte vers le haut, appelé pick-up, et comportant, d'une part, un habitacle (2) délimité par deux parois latérales, un pavillon (7) et un plancher (6) et contenant une rangée de sièges avant (4) et une rangée de sièges arrière (5) déplaçables entre une position d'utilisation et une position escamotée et, d'autre part, un coffre (3) délimité par un couvercle (20), une paroi d'extrémité (11) et une cloison transversale (10) de séparation entre l'habitacle (2) et le coffre (3) et surmontée par une lunette arrière (14), **caractérisé en ce que** le couvercle (20) est formé par deux demi-panneaux de coffre, un panneau avant (21) monté articulé sur un ensemble de support (30) monté articulé sur le bord supérieur (10a) de la cloison de séparation (10) et un panneau arrière (22) monté articulé sur le panneau avant (21) et **en ce que** la lunette arrière (14) est montée articulée sur ledit bord supérieur (10a) de la cloison de séparation (10) et **en ce que** ladite cloison de séparation (10) est montée articulée sur le plancher (6) du véhicule.

2. Véhicule automobile selon la revendication 1, **caractérisé en ce que** la lunette arrière (14) est déplaçable par basculement vers l'avant du véhicule entre une première position de prolongement de la cloison de séparation (10) et une seconde position escamotée rabattue contre cette cloison de séparation (10).

3. Véhicule automobile selon la revendication 1 ou 2, **caractérisé en ce que** le panneau arrière (22) du couvercle (20) est déplaçable par basculement entre une première position prolongeant le panneau avant (21) et une deuxième position rabattue sur ledit panneau avant (21).

4. Véhicule automobile selon la revendication 3, **caractérisé en ce que** les panneaux avant (21) et arrière (22) rabattus l'un sur l'autre sont déplaçables par basculement entre ladite deuxième position et une troisième position rabattue contre la cloison de séparation (10).

5. Véhicule automobile selon les revendications 2 et 3, **caractérisé en ce que** dans la seconde position de la lunette (14) et dans la deuxième position des panneaux avant (21) et arrière (22) du couvercle (20), la cloison de séparation (10) est déplaçable par basculement vers l'avant du véhicule entre une position sensiblement verticale séparant l'habitacle (2) du coffre (3) et une autre position sensiblement horizontale prolongeant le plancher (13) du coffre (3).

6. Véhicule automobile selon les revendications 2 et 4, **caractérisé en ce que** dans la seconde position de la lunette arrière (14) et dans la troisième position des panneaux avant (21) et arrière (22) du couvercle (20), la cloison de séparation (10) est déplaçable par basculement vers l'arrière du véhicule entre ladite deuxième position et une troisième position sensiblement verticale séparant l'habitacle (2) du coffre (3).

## Claims

1. Saloon-style motor vehicle convertible into a motor vehicle with an open-top cargo box, known as a pick-up truck, and comprising, on the one hand, a passenger compartment (2) bounded by two side walls, a roof (7) and a floor (6) and containing a front row of seats (4) and a rear row of seats (5) that can be moved between a use position and a retracted position, and, on the other hand, a boot (3) bounded by a lid (20), an end wall (11) and transverse partition (10) dividing the passenger compartment (2) from the boot (3) and surmounted by a rear window (14), said vehicle being **characterized in that** the lid (20) is formed by two boot half-panels, a front panel (21) hinged to a supporting assembly (30) hinged to the upper edge (10a) of the dividing partition (10) and a rear panel (22) hinged to the front panel (21), **in that** the rear window (14) is hinged to said upper edge (10a) of the dividing partition (10), and **in that** said dividing partition (10) is hinged to the floor (6) of the vehicle.

2. Motor vehicle according to Claim 1, **characterized in that** the rear window (14) can be moved by pivoting it between a first position in which it forms an extension of the dividing partition (10) and a second or retracted position in which it is folded against this dividing partition (10).

3. Motor vehicle according to Claim 1 or 2, **characterized in that** the rear panel (22) of the lid (20) can be moved by pivoting it between a first position in which it forms an extension of the front panel (21) and a second position in which it is folded onto said front panel (21).

4. Motor vehicle according to Claim 3, **characterized in that** the front (21) and rear (22) panels folded onto each other can be moved by pivoting them between said second position and a third position folded against the dividing partition (10).

5. Motor vehicle according to Claims 2 and 3, **characterized in that** in the second position at the rear window (14) and in the second position at the front (21) and rear (22) panels of the lid (20), the dividing partition (10) can be moved by pivoting it towards the front of the vehicle between an approximately vertical position dividing the partition (2) from the boot (3) and another approximately horizontal position in which it forms an extension of the floor (13) of the boot (3).

6. Motor vehicle according to Claims 2 and 4, **characterized in that** in the second position of the rear window (14) and in the third position of the front (21) and rear (22) panels of the lid (20), the dividing partition (10) can be moved by pivoting it towards the rear of the vehicle between said second position and a third, approximately vertical position dividing the passenger compartment (2) from the boot (3).

## Patentansprüche

1. Limousinenartiges Kraftfahrzeug, das in ein Kraftfahrzeug des Typs mit nach oben offenem Aufbau, Pickup genannt, umgewandelt werden kann, und das einerseits einen Fahrzeuginnenraum (2), der durch zwei Seitenwände, ein Dach (7) und einen Boden (6) begrenzt wird und eine Reihe von vorderen Sitzen (4) und eine Reihe von hinteren Sitzen (5), die zwischen einer Gebrauchsposition und einer umgeklappten Position bewegbar sind, enthält, und andererseits einen Kofferraum (3), der durch einen Deckel (20), eine Endwand (11) und eine Quertrennwand (10) zwischen dem Fahrzeuginnenraum (2) und dem Kofferraum (3) begrenzt wird und über dem eine Heckscheibe (14) angebracht ist, aufweist, **dadurch gekennzeichnet, dass** der Deckel (20) aus zwei Kofferraumplattenhälften, einer vorderen Platte (21), die an einer Stützanordnung (30) angelenkt ist, welche an dem oberen Rand (10a) der Trennwand (10) angelenkt ist, und einer hinteren Platte (22), die an der vorderen Platte (21) angelenkt ist, besteht, und dass die Heckscheibe (14) an dem oberen Rand (10a) der Trennwand (10) angelenkt ist und dass die Trennwand (10) an dem Boden (6) des Fahrzeugs angelenkt ist.

2. Kraftfahrzeug nach Anspruch 1, **dadurch gekennzeichnet, dass** die Heckscheibe (14) durch Kippen nach vorne des Fahrzeugs zwischen einer ersten Position, die die Trennwand (10) verlängert, und einer zweiten, gegen diese Trennwand (10) umgeklappten Position bewegbar ist.

3. Kraftfahrzeug nach Anspruch 1 oder 2, **dadurch gekennzeichnet, dass** die hintere Platte (22) des Deckels (20) durch Kippen zwischen einer ersten Position, die vordere Platte (21) verlängert, und einer zweiten, auf die vordere Platte (21) umgeklappten Position bewegbar ist.

4. Kraftfahrzeug nach Anspruch 3, **dadurch gekennzeichnet, dass** die vordere (21) und die hintere (22) Platte, die aufeinander geklappt sind, durch Kippen zwischen der zweiten Position und einer dritten, gegen die Trennwand (10) umgeklappten Position bewegbar sind.

5. Kraftfahrzeug nach den Ansprüchen 2 und 3, **dadurch gekennzeichnet, dass** in der zweiten Position der Scheibe (14) und in der zweiten Position der vorderen (21) und hinteren (22) Platte des Deckels (20) die Trennwand (10) durch Kippen nach vorne des Fahrzeugs zwischen einer im Wesentlichen vertikalen Position, die den Fahrzeuginnenraum (2) von dem Kofferraum (3) trennt, und einer anderen, im Wesentlichen horizontalen Position, die den Boden (13) des Kofferraums (3) verlängert, bewegbar ist.

6. Kraftfahrzeug nach den Ansprüchen 2 und 4, **dadurch gekennzeichnet, dass** in der zweiten Position der Heckscheibe (14) und in der dritten Position der vorderen (21) und der hinteren (22) Platte des Deckels (20) die Trennwand (10) durch Kippen nach hinten des Fahrzeugs zwischen der zweiten Position und einer dritten, im Wesentlichen vertikalen Position, die den Fahrzeuginnenraum (2) von dem Kofferraum (3) trennt, bewegbar ist.
